# EUROPÄISCHE PATENTSCHRIFT

(11) **EP 1 915 685 B1**
(45) Veröffentlichungstag und Bekanntmachung des Hinweises auf die Patenterteilung: **05.11.2008**
(21) Anmeldenummer: 06777938.9
(22) Anmeldetag: 24.07.2006
(51) Int. Cl.: G06F 11/16, G06F 12/08

(54) **VERFAHREN UND VORRICHTUNG ZUR STEUERUNG EINES SPEICHERZUGRIFFS BEI EINEM RECHNERSYSTEM MIT WENIGSTENS ZWEI AUSFÜHRUNGSEINHEITEN**
METHOD AND DEVICE FOR CONTROLLING A MEMORY ACCESS IN A COMPUTER SYSTEM WITH AT LEAST TWO EXECUTION UNITS
PROCEDE ET DISPOSITIF POUR COMMANDER L'ACCES A UNE MEMOIRE DANS UN SYSTEME INFORMATIQUE COMPRENANT AU MOINS DEUX UNITES D'EXECUTION

(30) Priorität: 08.08.2005 DE 102005037227
(43) Veröffentlichungstag der Anmeldung: 30.04.2008
(73) Patentinhaber: ROBERT BOSCH GMBH, 70442 Stuttgart (DE)
(72) Erfinder: WEIBERLE, Reinhard, 71665 Vaihingen/Enz (DE); MUELLER, Bernd, 70839 Gerlingen (DE); BOEHL, Eberhard, 72768 Reutlingen (DE); COLLANI, Yorck, 71717 Beilstein (DE); GMEHLICH, Rainer, 71254 Ditzingen (DE)
(86) Internationale Anmeldenummer: PCT/EP2006/064597
(87) Internationale Veröffentlichungsnummer: WO 2007/017369

(56) Entgegenhaltungen:
- EP-A- 0 863 464
- US-A- 5 822 767
- US-A1- 2004 059 875
- US-B1- 6 385 755
- US-B1- 6 640 313

## Beschreibung

### Stand der Technik

Die Erfindung geht aus von einem Verfahren und einer Vorrichtung zum Vergleich zwischen Ausgangsdaten wenigstens zweier Ausführungseinheiten eines Mikroprozessors gemäß den Oberbegriffen der unabhängigen Ansprüche.

Transiente Fehler, ausgelöst durch Alpha-Teilchen oder kosmische Strahlung werden zunehmend ein Problem für integrierte Schaltungen. Durch abnehmende Strukturbreiten, sinkende Spannungen und höhere Taktfrequenzen nimmt die Wahrscheinlichkeit zu, dass eine Spmnungsspitze, hervorgerufen durch ein Alpha-Teilchen oder kosmische Strahlung, einen logischen Wert in einer integrierten Schaltung verfälscht. Ein falsches Berechnungsresultat kann die Folge sein. In sicherheitsrelevanten Systemen müssen daher solche Fehler zuverlässig detektiert werden.

Bei sicherheitsrelevanten Systemen, wie z.B. einem ABS-Regelsystem in einem Kraftfahrzeug, in denen Fehlfunktionen der Elektronik sicher detektiert werden müssen, werden gerade bei den entsprechenden Steuereinrichtungen solcher Systeme üblicherweise Redundanzen zur Fehlererkennung vorgesehen. So ist beispielsweise in bekannten ABS-Systemen jeweils der komplette Mikrocontroller dupliziert, wobei die gesamten ABS-Funktionen redundant berechnet und auf Übereinstimmung geprüft werden. Tritt eine Diskrepanz der Ergebnisse auf, so wird das ABS-System abgeschaltet.

Solche Prozessoreinheiten mit wenigstens zwei integrierten Ausführungseinheiten sind auch als Dual-Core oder Multi-Core Architekturen bekannt. Die verschiedenen Ausführungseinheiten (Cores) führen redundant und taktsynchron das gleiche Programmsegment aus, die Ergebnisse der beiden Ausführungseinheiten werden verglichen, und ein Fehler wird dann bei dem Vergleich auf Übereinstimmung erkannt werden.

Prozessoren werden mit Caches ausgerüstet, um den Zugriff auf Instruktionen und Daten zu beschleunigen. Das ist bei der ständig wachsenden Datenmenge einerseits und der zunehmenden Komplexität der Datenverarbeitung mit immer schneller arbeitenden Prozessoren andererseits notwendig. Durch einen Cache wird der langsame Zugriff auf einen großen (Haupt-) Speicher teilweise vermieden und der Prozessor muss damit nicht auf die Bereitstellung der Daten warten. Es sind sowohl Caches ausschließlich für Befehle als auch ausschließlich für Daten bekannt, aber auch "Unified Caches", bei denen sowohl Daten als auch Instruktionen in demselben Cache abgelegt werden. Bekannt sind auch Systeme mit mehreren Levels (Hierarchiestufen) von Caches. Solche mehrstufigen Caches werden eingesetzt, um mit abgestuften Speichergrößen und verschiedenartigen Adressierungsstrategien der Caches auf den verschiedenen Levels eine optimale Anpassung der Geschwindigkeiten zwischen Prozessor und dem (Haupt-) Speicher vorzunehmen.

Der zweite Grund für den Einsatz von Caches ist das Vermeiden von Zugriffskonflikten aufden System- oder Speicherbus in einem Multiprozessorsystemen. Dort ist es üblich, jeden Prozessor mit einem Cache oder bei Multi-Level Caches mit entsprechend mehreren Caches auszurüsten.

In einer bekannten Anordnung von Caches in einem umschaltbarem Dual Core System besitzt jeder der zwei Cores einen fest zugeordneten Cache auf den der Core im Performanzmodus zugreift. Im Vergleichsmodus greifen beide Cores auf ihren jeweiligen Cache zu. Neben der Tatsache, dass im Vergleichsmodus ein Datum mehrfach im Cache gespeichert wird (für jede Ausführungseinheit separat), ist insbesondere der zeitliche Aufwand bei einem Wechsel vom Performanzmodus in den Vergleichsmodus beträchtlich. Bei diesem Wechsel muss der Zustand der Caches angeglichen werden. Erst dadurch wird gewährleistet, dass im Vergleichsmodus nicht der Fall eintritt, dass eine der am Vergleich beteiligten Ausführungseinheiten einen Cache-Miss (geforderte Datum ist nicht im Cache gespeichert und muss nachgeladen werden) hat und ein andere einen Cache-Hit (geforderte Datum ist im Cache gespeichert und muss nicht nachgeladen werden).

### Vorteile der Erfindung

Aufgabe der Erfindung ist es bei einem Mehrprozessorsystem, dass die Nachteile der bisher bekannten Verfahren bei der Verwendung von Caches in einem umschaltbarem Mehrprozessorsystems vermieden werden. Als Nachteil stellt sich dabei vor allem dar, dass in bekannten Anordnungen von Caches diese aufwändig bei einer Umschaltung von einem Performanzmodus in einen Vergleichsmodus synchronisiert werden müssen

Für die Umschaltmöglichkeit zwischen verschiedenen Modi eines Mehrprozessorsystems wie Performanz- und Vergleichsmodus ist es vorteilhaft, wenn nicht jede Ausführungseinheit einen eigenen Cache besitzt, da insbesondere beim Umschalten in den Vergleichsmodus eine zeitraubende Angleichung der Caches vorgenommen werden müsste. Darauf kann in den vorgeschlagenen Strukturen weitgehend verzichtet werden.

Weiterhin ist es vorteilhaft wenn verschiedene Caches für die verschiedenen Modi (Vergleich bzw. Performanz) mit ihrer Größe den Anforderungen der Modi angepasst werden können. Weiterhin kann es vorteilhaft sein, dass in manchen Modi auf den Cache ganz verzichtet wird, insbesondere wenn der Buszugriff selbst nicht wesentlich langsamer als ein Cache-Zugriff ist.

Vorteilhaft ist ein Verfahren zur Steuerung eines Speicherzugriffs bei einem Rechnersystem mit wenigstens zwei Ausführungseinheiten beschrieben, wobei ein Zwischenspeicher, insbesondere ein Cache vorgesehen ist und weiterhin Umschaltmittel und Vergleichsmittel vorgesehen sind, wobei zwischen einem Performanzmodus und einem Vergleichsmodus umgeschaltet wird, **dadurch gekennzeichnet, dass** Mittel eingestezt werden so dass auf den Zwischenspeicher im Vergleichsmodus von beiden Ausführungseinheiten zugegriffen wird und im Performanzmodus nur von einer Ausführungseinheit.

Die Merkmale des Oberbegriffs dieses Verfahrens werden in Dokument US-B-6 640 313 offenbart.

Vorteilhaft ist ein Verfahren beschrieben, **dadurch gekennzeichnet, dass** im Performanzmodus eine Verbindung der zweiten Ausführungseinheit zum Zwischenspeicher durch Schaltmittel aufgetrennt wird.

Vorteilhaft ist ein Verfahren beschrieben, **dadurch gekennzeichnet, dass** im Vergleichsmodus die Vergleichsmittel Informationen auf Übereinstimmung vergleichen und bei Abweichung auf Fehler erkannt wird, wobei bei Fehler ein Zugriff auf den Zwischenspeicher verhindert wird.

Vorteilhaft ist ein Verfahren beschrieben, **dadurch gekennzeichnet, dass** im Vergleichsmodus die Vergleichsmittel Informationen auf Übereinstimmung vergleichen und bei Abweichung auf Fehler erkannt wird, wobei bei Fehler Informationen im Zwischenspeicher ungültig gemacht oder gesperrt werden.

Vorteilhaft ist ein Verfahren beschrieben, **dadurch gekennzeichnet, dass** im Vergleichsmodus die Vergleichsmittel Informationen auf Übereinstimmung vergleichen und bei Abweichung auf Fehler erkannt wird, wobei bei Fehler das Rechnersystem neu oder wieder gestartet wird.

Vorteilhaft ist ein Verfahren beschrieben, **dadurch gekennzeichnet, dass** im Vergleichsmodus die Vergleichsmittel Informationen auf Übereinstimmung vergleichen und bei Abweichung auf Fehler erkannt wird, wobei bei Fehler wenigstens eine Ausführungseinheit neu oder wieder gestartet wird.

Vorteilhaft ist eine Vorrichtung zur Steuerung eines Speicherzugriffs bei einem Rechnersystem mit wenigstens zwei Ausführungseinheiten enthalten, wobei ein Zwischenspeicher, insbesondere ein Cache vorgesehen ist und weiterhin Umschaltmittel und Vergleichsmittel vorgesehen sind, wobei zwischen einem Performanzmodus und einem Vergleichsmodus umgeschaltet wird, **dadurch gekennzeichnet, dass** Mittel enthalten sind, die derart ausgebildet sind das durch diese auf den Zwischenspeicher im Vergleichsmodus von beiden Ausführungseinheiten zugegriffen wird und im Performanzmodus nur von einer Ausführungseinheit.

Die Merkmale des Oberbegriffs dieser Vorrichtung werden in Dokument US-B-6 640 313 offenbart.

Vorteilhaft ist eine Vorrichtung enthalten, **dadurch gekennzeichnet, dass** die Mittel als Schaltmittel ausgebildet sind, die einen Zugriff der zweiten Ausführungseinheit auf den Zwischenspeicher verhindert oder erlaubt.

Vorteilhaft ist eine Vorrichtung enthalten, **dadurch gekennzeichnet, dass** die Vergleichsmittel derart ausgestaltet sind, dass diese im Vergleichsmodus Informationen auf Übereinstimmung vergleichen und bei Abweichung auf Fehler erkennen und bei Fehler einen Zugriff auf den Zwischenspeicher verhindern.

Vorteilhaft ist eine Vorrichtung enthalten, **dadurch gekennzeichnet, dass** die Vergleichsmittel derart ausgestaltet sind, dass diese im Vergleichsmodus Informationen auf Übereinstimmung vergleichen und bei Abweichung auf Fehler erkennen und bei Fehler Informationen im Zwischenspeicher ungültig machen oder sperren.

Vorteilhaft ist eine Vorrichtung enthalten, **dadurch gekennzeichnet, dass** die Vergleichsmittel zwischen wenigstens einer Ausführungseinheit und dem Zwischenspeicher lokalisiert sind.

Vorteilhaft ist eine Vorrichtung enthalten, **dadurch gekennzeichnet, dass** der Zwischenspeicher zwischen wenigstens einer Ausführungseinheit und den Vergleichsmitteln lokalisiert ist.

Vorteilhaft ist eine Vorrichtung enthalten, **dadurch gekennzeichnet, dass** die Umschaltmittel und die Vergleichsmittel als eine Umschalt- und Vergleichseinheit realisiert sind.

Weitere Vorteile und vorteilhafte Ausgestaltungen ergeben sich aus den Merkmalen der Ansprüche sowie der Beschreibung.

### Figuren

- Figur 1: zeigt ein System C100 mit zwei Ausführungseinheiten von der nur eine im Performanz- und Vergleichsmodus über einen Cache auf einen Bus C10 zu- greift.
- Figur 2: zeigt ein System C100c mit zwei Ausführungseinheiten von denen beide im Performanz- und Vergleichsmodus über einen Cache auf einen Bus C10 zugreifen, von denen aber nur einer im Vergleichsmodus genutzt wird.
- Figur 3: zeigt ein System C100a mit zwei Ausführungseinheiten von denen nureine im Performanzmodus über einen Cache auf einen Bus C10 zugreift. Im Ver- gleichsmodus wird kein Cache verwendet.
- Figur 4: zeigt ein System C200 mit zwei Ausführungseinheiten von denen beide im Performanz- und Vergleichsmodus über einen Cache auf einen Bus C10 zugreifen. Im Vergleichsmodus erfolgt der Zugriff auf den Bus über eine sepa- rate Busanschlusseinheit.
- Figur 5: zeigt ein System C200a mit zwei Ausführungseinheiten von denen beide im Performanz- und Vergleichsmodus über einen Cache auf einen Bus C10
- Figur 6: zugreifen. Im Vergleichsmodus erfolgt der Zugriff auf den Bus über einen se- paraten Cache und eine separate Busanschlusseinheit. zeigt ein System C300 mit zwei Ausführungseinheiten von denen beide im Performanz- und Vergleichsmodus über einen Cache auf einen Bus C10 zugreifen, von denen aber nur einer im Vergleichsmodus genutzt wird. Der im Vergleichsmodus genutzte Cache nutzt intern verschiedene Speicher für seine Aufgabe, abhängig vom aktuellen Modus des System C300.
- Figur 7: zeigt ein System C400 mit zwei Ausführungseinheiten von denen beide im Performanz- und Vergleichsmodus über einen Cache auf einen Bus C10 zugreifen, von denen aber nur einer im Vergleichsmodus genutzt wird. Der im Vergleichsmodus genutzte Cache nutzt intern verschiedene Speicher für seine Aufgabe, abhängig vom aktuellen Modus des System C400. Das Größenver- hältnis dieser beiden Speicher zueinander wird durch eine separate Einheit ge- steuert.
- Figur 8: zeigt ein System C500 mit zwei Ausführungseinheiten die über eine Cache- einheit auf den Bus C10 zugreifen. Je nach Modus des System C500 werden die Speicherzugriffe der Ausführungseinheiten unterschiedliche bedient.

### Beschreibung der Ausführungsbeispiele

Eine Ausführungseinheit kann im Folgenden sowohl einen Prozessor/Core/CPU, als auch eine FPU (Floating Point Unit), DSP (Digitaler Signalprozessor), Coprozessor oder ALU (Arithmetic logical Unit) bezeichnen.

Bei manchen Mehrprozessorsystemen wird ein Cache nur deshalb eingesetzt, um Konflikte auf dem System- und/oder Speicherbus zu vermeiden. Wäre nur eine Ausführungseinheit vorhanden, dann würde in diesem Fall kein Cache notwendig sein, da der Speicher schnell genug ist, um die Leseanforderungen einer Ausführungseinheit zu bedienen.

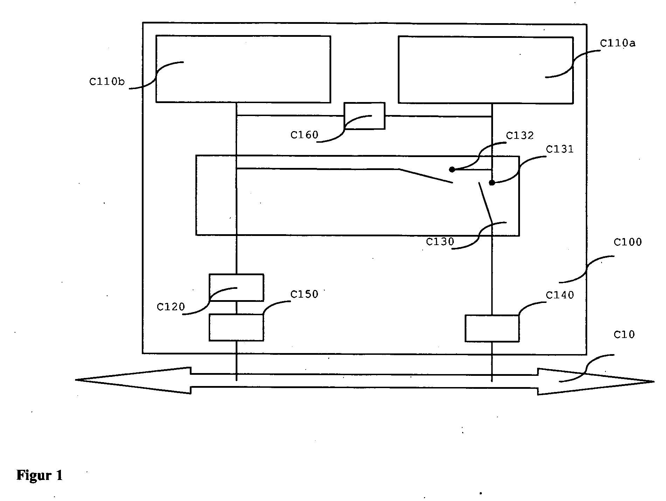

Figur 1 zeigt eine erste Ausführung eines Mehrprozessorsystem C100 mit zwei Ausführungseinheiten C110a und C110b, welches über einen Bus C10 auf einen Speicher zugreifen kann.

Die Einheit C130 regelt, je nach dem Modus des Systems C100, wie auf den Bus C10 zugegriffen wird. Im Performanzmodus ist der Schalter C131 geschlossen und der Schalter C132 geöffnet. Somit greift die Ausführungseinheit C110b über den Cache C120 und den Busanschluss C150 auf den Bus C10 zu. Die Ausführungseinheit C110a ist über den Anschluss C140 direkt mit dem Bus C10 verbunden. Ist der Cache C120 richtig dimensioniert, so werden Speicherzugriffe der Ausführungseinheit C110b hauptsächlich aus C120 bedient, so dass nur selten ein Zugriff auf den Bus C10 notwendig ist. Die Speicherzugriffe der Ausführungseinheit C110a führen immer zu Zugriffen auf den Bus C10. Nur wenn ein Speicherzugriff nicht durch den Cache C120 bedient werden kann, wird über die Einheit C150 auf den Bus zugegriffen. Findet zur selben Zeit ein Zugriff auf den Bus C10 durch die Ausführungseinheit C110a über C140 statt, tritt ein Buskonflikt auf, der durch das Busprotokoll aufgelöst werden muss. Da der Cache C120 für die Software nicht sichtbar ist, ist es vorteilhaft, wenn die Einheit C120 auf dem Bus C10 mithorcht ("Bus-Snooping"), ob die Ausfiihrungseinheit C110a über C 140 ein Datum im Speicher ändert, welches sich auch im Cache C120 befindet. Ist dies der Fall muss das entsprechende Datum in C120 durch das neue Datum ersetzt oder als ungültig markiert werden.

Im Vergleichsmodus ist der Schalter C132 geschlossen und der Schalter C131 offen. Beide Ausführungseinheiten greifen gemeinsam über den Cache C120 auf den Bus C10 zu. Eine Vergleichseinheit C160 vergleicht die Ausgangssignale beider Ausführungseinheiten und generiert bei Unterschieden ein Fehlersignal. Optional kann die Vergleichseinheit C160 mit der Busanschlusseinheit C150 verbunden sein (hier nicht eingezeichnet) und einen Schreibzugriff verhindern, sollten die Ausgangssignale der beiden Cores differieren. Im Performanzmodus ist die Einheit C160 deaktiviert. Die Deaktivierung der Vergleichseinheit kann auf verschiedene Weise realisiert werden: Entweder wird ein Vergleich durch die Einheit C160 nicht durchgeführt, es werden keine Signale zum Vergleich an die Einheit C160 angelegt oder obwohl der Vergleich stattfindet, wird das Ergebnis ignoriert.

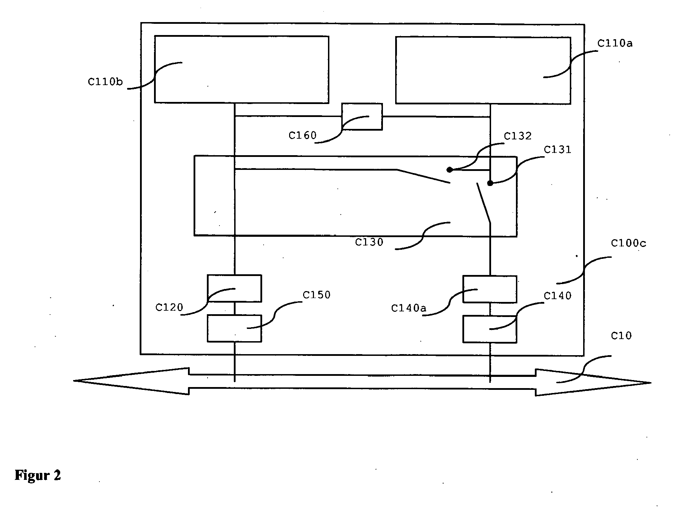

Eine Ausführungsform der Erfindung ist in Figur 2 mit dem System C100c dargestellt. In dieser Ausführungsform arbeiten die aus Figur 1 bekannten Elemente in gleicher Art und Weise. Die Ausführungseinheit C100a greift im Performanzmodus mit geschlossenem Schalter C131 allerdings ebenfalls über einen Cache C140a und den Busanschluss C140 auf den Bus C10 zu. Im Vergleichsmodus wird über den dann geschlossenen Schalter C132 der Cache C120 von beiden Ausführungseinheiten C110a und C110b verwendet, während C140a nur im Performanzmodus von C110a verwendet wird. Die beiden Caches C120 und C140a können verschiedene Größen besitzen und dementsprechend für die in den verschiedenen Modi angepassten Aufgaben optimiert werden.

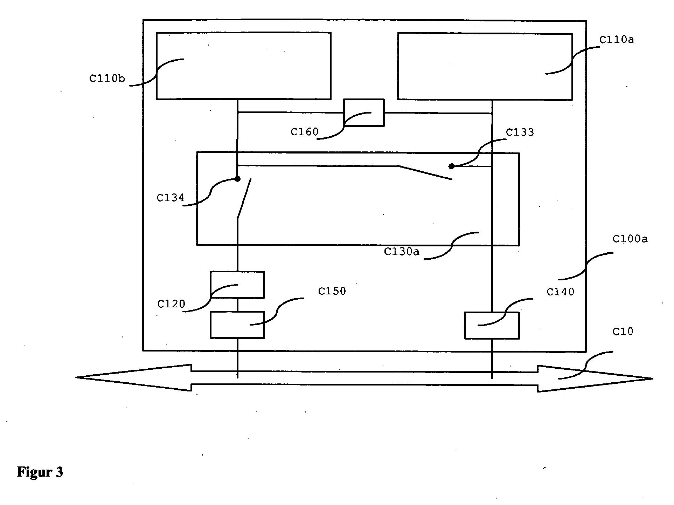

In Figur 3 ist eine weitere Ausführungsform der Erfindung dargestellt. C100a bezeichnet dabei ein Mehrprozessorsystems. Hier ist im Performanzmodus der Schalter C133 offen und der Schalter C134 geschlossen und eine Ausführungseinheit C110b greift über einen Cache C120 und die Busanschlusseinheit C150 auf den Bus C10 zu. Die andere Ausführungseinheit C110a greift direkt über die Einheit C140 auf den Bus C10 zu. Im Vergleichsmodus dagegen ist der Schalter C133 geschlossen und C134 offen und beide Ausführungseinheiten greifen direkt über C140 auf den Bus C10 zu und es wird der Cache C120 nicht verwendet. Eine Vergleichseinheit C160 vergleicht die Ausgangssignale beider Ausführungseinheiten und generiert bei Unterschieden ein Fehlersignal. Optional kann auch hier die Vergleichseinheit C160 mit den Busanschlusseinheiten C140 verbunden sein (hier nicht eingezeichnet) und einen Schreibzugriff verhindern, sollten die Ausgangssignale der beiden Ausführungseinheiten differieren. Im Performanzmodus ist die Einheit C160 deaktiviert. Die Deaktivierung kann auf verschiedene, schon beschriebene Weisen realisiert werden.

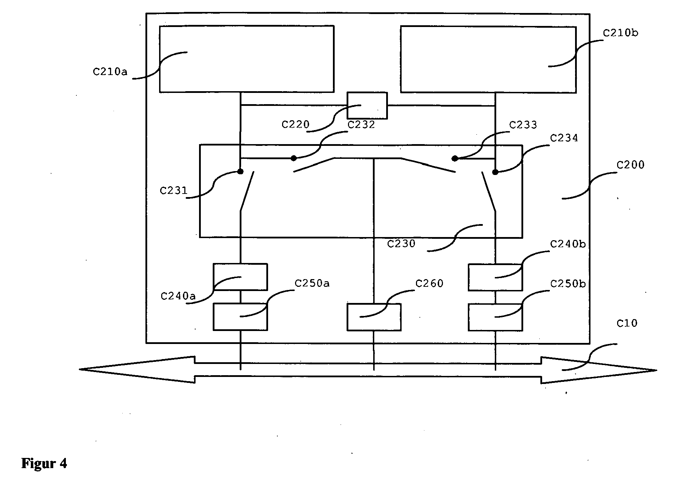

In einer weiteren Ausführung des Mehrprozessorsystems werden ebenfalls Caches nur zur Vermeidung von Zugriffskonflikten auf dem Speicherbus eingesetzt. Figur 4 zeigt ein Mehrprozessorsystem C200 mit zwei Ausführungseinheiten C210a und C210b, welche auf verschiedene Art und Weise über einen Bus C10 auf einen Speicher zugreifen können. Die Einheit C230 regelt, je nach dem Modus des Systems C200, wie auf den Bus C10 zugegriffen wird. Im Performanzmodus sind die Schalter C231 und C234 geschlossen und die Schalter C232 und C233 geöffnet. Somit greift die Ausführungseinheit C210a über den Cache C240a mit Busanschluss C250a und die Ausführungseinheit C210b über den Cache C240b mit dem Busanschluss C250b auf den Bus C10 zu. Nur wenn die Speicherzugriffe aus den jeweiligen Caches der Ausführungseinheiten nicht bedient werden können, muss ein Zugriff auf den Bus C10 erfolgen. Findet zur selben Zeit ein Zugriff auf den Bus C10 durch andere Ausführungseinheiten statt, tritt ein Buskonflikt auf, der durch das Busprotokoll aufgelöst werden muss. Da die Caches C240a und C240b für die Software nicht sichtbar sind, ist es vorteilhaft, wenn ein Datum, welches von einer Ausführungseinheit C210a, C210b in den jeweiligen Cache C240a, C240b geschrieben wird, ebenfalls sofort über den jeweiligen Busanschluss C250a, C250b auf den Bus C10 in den Speicher geschrieben wird ("Write through" Strategie).

Weiterhin ist es vorteilhaft, wenn die Einheiten C240a und C240b (über C250a resp. C250b) auf dem Bus C10 mithorchen ("Bus-Snooping"), ob die Ausführungseinheit C210a über C250a bzw. C210b über C250b ein Datum im Speicher ändert, welches sich auch im jeweils anderen Cache befindet. Ist dies der Fall muss das entsprechende Datum durch das neue Datum im betroffen Cache ersetzt oder als ungültig markiert werden.

Im Vergleichsmodus sind die Schalter C232 und C233 geschlossen und die Schalter C231 und C234 offen. Beide Ausführungseinheiten greifen gemeinsam über C260 auf den Bus C10 zu. Die Caches (C240a, C240b) werden nicht verwendet. Eine Vergleichseinheit C220 vergleicht die Ausgangssignale beider Ausführungseinheiten und generiert bei Unterschieden ein Fehlersignal. Optional kann die Vergleichseinheit C220 mit der Busanschlusseinheit C260 verbunden sein (hier nicht eingezeichnet) und einen Schreibzugriff verhindern, sollten die Ausgangssignale der beiden Ausführungseinheiten differieren. Im Performanzmodus ist die Einheit C220 deaktiviert. Die Deaktivierung kann auf verschiedene, schon beschriebene Weisen realisiert werden.

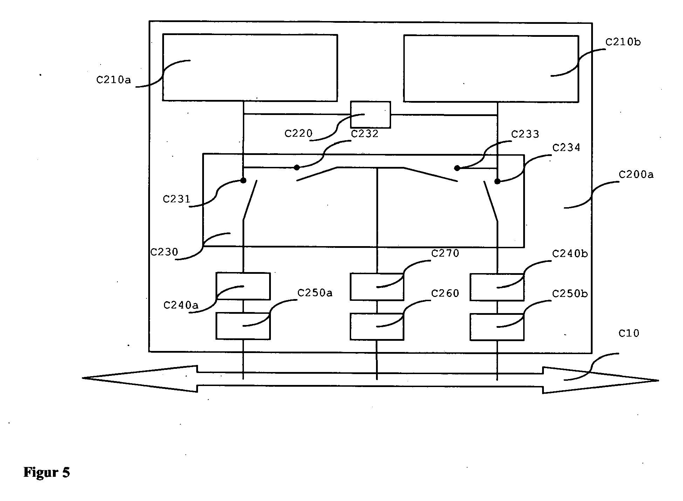

Figur 5 zeigt eine weitere Ausführungsform C200a des Mehrprozessorsystems, in der gegenüber der Ausführungsform C200 dargestellt in Figur 4 ein zusätzlicher Cache 270 für den Vergleichsmodus eingefügt wurde. Die schon bekannten Komponenten aus Figur 4 arbeiten in gleichen wie dort beschriebenen Art und Weise. Auch in diesem System ist es von Vorteil, wenn für alle Caches eine "write through" Strategie verwendet und der Inhalt aller Caches durch "Bus snooping" konsistent gehalten wird.

Die hier vorher beschriebenen Varianten nach den Figuren 4 und 5 lassen sich auf mehr als zwei Ausführungseinheiten erweitern. Je Ausführungseinheit sind in diesen Fall eine Cacheeinheit und eine Busanschlusseinheit vorhanden, die im Performanzmodus genutzt werden. Im Vergleichsmodus greifen alle Ausführungseinheiten über die Busanschlusseinheit C260 (optional mit einem Cache C270) auf den Bus C 10 zu.

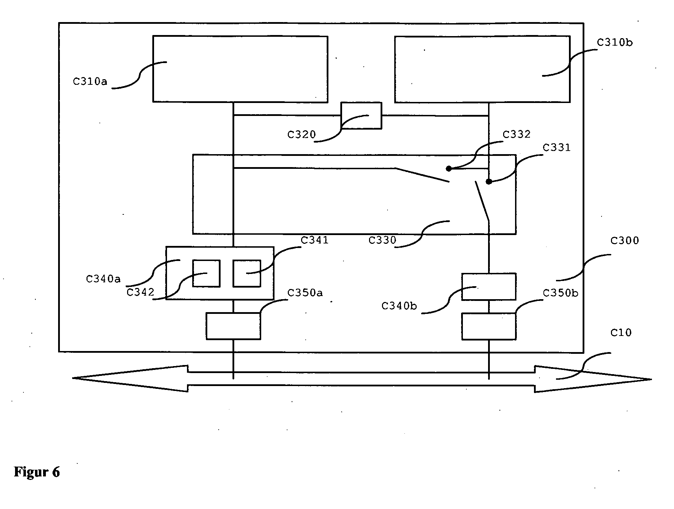

Eine weitere Ausführungsform der Erfindung ist in Figur 6 dargestellt. Auch hier besteht die Prozessoreinheit C300 aus mindestens zwei Ausführungseinheiten C310a und C310b, welche jeweils über einen Cache C340a, 340b und einen Busanschluss C350a, C350büber den Bus C10 auf einen Speicher zugreifen. Im Performanzmodus ist der Schalter C332 offen und der Schalter C331 in der Einheit C330 geschlossen. Die Ausführungseinheit C310a greift in dieser Konfiguration über den Cache C340a und den Busanschluss C350a auf den Bus C10 zu und die Ausführungseinheit C310b über den Cache C340b und den Busanschluss C350b.

Im Vergleichsmodus ist in der Umschalteinheit C330 der Schalter C332 geschlossen und der Schalter C331 offen. Jetzt greifen beide Ausführungseinheiten über den Cache C340a und den Busanschluss C350a auf den Bus C10 zu. Die Einheit C340a besteht selbst wiederum aus zwei separaten Cachespeichern oder Cachebereichen C341,C342, die für das Caching verwendet werden. Im Performanzmodus wird nur der SpeicherBereich C341 verwendet, während im Vergleichsmodus zusätzlich zum Speicher/Bereich C341 der Speicher/Bereich C342 für das Caching verwendet wird. Eine Vergleichseinheit C320 vergleicht im Vergleichsmodus die Ausgangssignale beider Ausführungseinheiten und generiert bei Unterschieden ein Fehlersignal. Optional kann auch hier die Vergleichseinheit C320 mit den Busanschlusseinheiten C350a verbunden sein (hier nicht eingezeichnet) und einen Schreibzugriff verhindern, sollten die Ausgangssignale der beiden Cores im Vergleichsmodus differieren. Im Performanzmodus ist die Vergleichseinheit C320 wie schon für die Vergleichseinheit C160, dargestellt in Figur 1, beschrieben, deaktiviert.

In einer weiteren Ausführungsform kann die Einheit C340a so aufgebaut sein, dass im Vergleichsmodus der Speicher C341 und C342 zwar ebenso zusammen benutzt, aber nur Inhalte aus dem Speicher C342 im Vergleichsmodus verdrängt und durch andere Inhalte ersetzt werden können.

Allen Ausführungsformen in Ausgestaltung von Figur 6 lassen sich auf mehr als zwei Ausführungseinheiten erweitern. Je Ausführungseinheit sind in diesen Fall eine Cacheeinheit und eine Busanschlusseinheit vorhanden, die im Performanzmodus genutzt werden. Im Vergleichsmodus greifen alle Ausführungseinheiten über den Cache C340a und die Busanschlusseinheit C350a auf den Bus C10 zu.

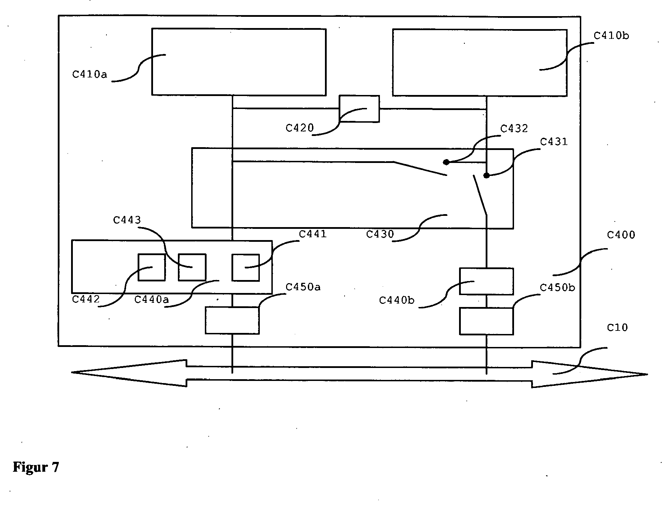

Eine weitere mögliche Ausführungsform der Erfindung ist in Figur 7 dargestellt. Auch hier besteht die Prozessoreinheit C400 aus mindestens zwei Ausführungseinheiten C410a und C410b, welche jeweils über einen Cache (C440a, 440b) und einen Busanschluss (C450a, C450b) auf den Bus C10 auf den (Haupt-)Speicher zugreifen.

Im Performanzmodus ist der Schalter C432 offen und der Schalter C431 in der Einheit C430 geschlossen. Die Ausführungseinheit C410a greift in dieser Konfiguration über den Cache C440a und den Busanschluss C450a auf den Bus C10 zu und die Ausführungseinheit C410b über den Cache C440b und den Busanschluss C450b.

Im Vergleichsmodus ist in der Umschalteinheit C430 der Schalter C432 geschlossen und der Schalter C431 offen. Jetzt greifen beide Ausführungseinheiten über den Cache C440a und den Busanschluss C450a auf den Bus C10 zu. Die Einheit C440a besteht selbst wiederum aus zwei separaten Cachespeichern oder Bereichen C441, C442, die für das Caching verwendet werden. Im Performanzmodus wird nur der Speicher/Bereich C441 verwendet, während im Vergleichsmodus der Speicher/Bereich C442 für das Caching verwendet wird. Die Summe der Größe beider Speicher/Bereiche C441 + C442 ist konstant, aber der Verhältnis der Größe zwischen C441 und C442 wird durch die Einheit C443 gesteuert. Durch diese Einheit C443 ist eine Änderung des Verhältnisses im Betrieb möglich.

Eine Vergleichseinheit C420 vergleicht im Vergleichsmodus die Ausgangssignale beider Ausführungseinheiten und generiert bei Unterschieden ein Fehlersignal. Optional kann auch hier die Vergleichseinheit C420 mit den Busanschlusseinheiten C450a verbunden sein (hier nicht eingezeichnet) und einen Schreibzugriff verhindern, sollten die Ausgangssignale der beiden Cores im Vergleichsmodus differieren. Im Performanzmodus ist die Einheit C420 deaktiviert, wie schon für Vergleichseinheit C160 aus Figur 1 beschrieben.

Die Einheit C440a kann jetzt unter Beibehaltung der Funktion von Einheit C443 wie folgt ausgeführt werden:
1. Im Vergleichsmodus werden beide Speicher C441 und C442 für den Cache verwendet.
2. Im Vergleichsmodus werden beide Speicher C441 und C442 für den Cache verwendet, wobei aber nur Inhalte aus dem Speicher C442 im Vergleichsmodus verdrängt und durch andere Inhalte ersetzt werden können.

Allen Ausführungsformen in der Ausgestaltung von Figur 7 lassen sich auf mehr als zwei Ausführungseinheiten erweitern. Je Ausführungseinheit sind in diesen Fall eine Cacheeinheit und eine Busanschlusseinheit vorhanden, die im Performanzmodus genutzt werden. Im Vergleichsmodus greifen alle Ausführungseinheiten über den Cache C440a und die Busanschlusseinheit C450a auf den Bus C 10 zu.

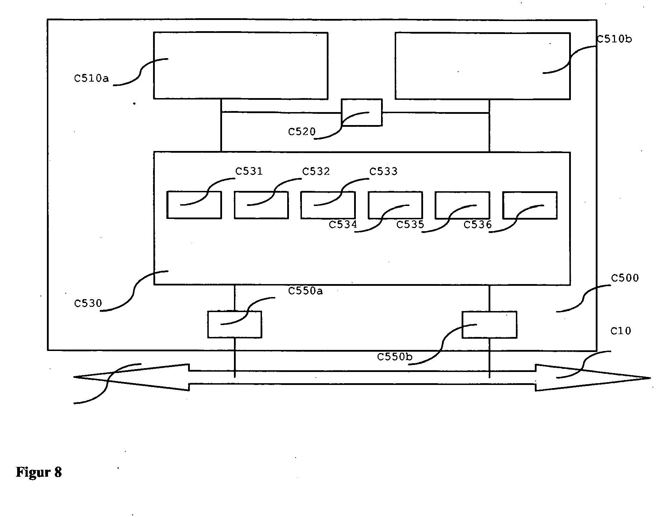

In Figur 8 ist eine weitere mögliche Ausführungsform gezeigt. In einem Prozessorsystem C500 existieren mindestens zwei Ausführungseinheiten C510a und C510b. Beide Ausführungseinheiten sind mit einer Cacheeinheit C530 verbunden. Diese Einheit C530 besitzt je Ausführungseinheit eine Busanschlusseinheit C550a, C550b über die ein Zugriff auf den Bus C10 auf einen Speicher möglich ist. Die Cacheeinheit C530 besitzt je angeschlossener Ausführungseinheit zwei Cachespeicher (hier C531 und C533 für C510a und C534 und C536 für C510b). Die Summe der Größen dieser Speicherpaare ist konstant, das Verhältnis kann aber über jeweils eine Einheit (C532 für C531, C533 und C535 für C534, C536) im Betrieb geändert werden.

Im Performanzmodus werden Speicherzugriffe der Ausführungseinheiten immer von dem Speicherpaar "gecached", welches der Ausführungseinheit zugeordnet ist. Dabei wird nur einer der beiden Cachespeicher verwendet (hier C531 für C510a und C534 für C510b). Können Speicherzugriffe der Ausführungseinheit nicht aus dem Cachespeicher bedient werden, werden die notwendigen Buszugriffe auf C10 immer über den zur Ausführungseinheit zugeordneten Busanschluss getätigt (hier C550a für C510a und C550b für C510b). Zugriffe im Performanzmodus durch Ausführungseinheiten, die gleichzeitig stattfinden, können auch gleichzeitig durch die Einheit C530 bedient werden, es sei denn, es tritt durch den gleichzeitigen Zugriff auf C10 ein Buskonflikt auf.

Im Vergleichsmodus werden Speicherzugriffe der Ausführungseinheiten durch die Cachspeicher bedient, die nicht im Performanzmodus verwendet werden (hier C533 und 536). Welcher Busanschluss für einen Buszugriff verwendet wird ist beliebig. Eine Vergleichseinheit C520 vergleicht im Vergleichsmodus die Ausgangssignale aller Ausführungseinheiten und generiert bei Unterschieden ein Fehlersignal. Optional kann auch hier die Vergleichseinheit C520 mit den Busanschlusseinheiten C550a, C550b verbunden sein (hier nicht eingezeichnet) und einen Schreibzugriff verhindern, sollten die Ausgangssignale der beiden Cores im Vergleichsmodus differieren. Im Performanzmodus ist die Einheit C520 deaktiviert. Die Deaktivierung kann erfolgen entsprechend wie bei Vergleichseinheit C160 aus Figur 1.

In einer weiteren Ausführungsform kann die Einheit C530 so aufgebaut sein, dass im Vergleichsmodus sämtliche Cachespeicher (hier C531, C533, C534, C536) verwendet wird aber nur Inhalte aus den Cachespeichern verworfen und ersetzt werden, die im Performanzmodus nicht verwendet werden.

Für alle hier beispielhaft dargestellten Implementierungen gilt, dass die Umschalt- und Vergleichseinheit immer zwischen den Ausführungseinheiten und ihren zugehörigen Caches liegt. Wird im Vergleichsmodus ein Cache verwendet, so muss dieser mit ECC oder Parity abgesichert sein, damit auch hier Fehler erkannt werden. Zusätzlich ist es von Vorteil, wenn für die Caches eine "write through" Strategie verwendet und der Inhalt der Caches durch "Bus snooping" konsistent gehalten wird.

## Patentansprüche

1. Verfahren zur Steuerung eines Speicherzugriffs bei einem Rechnersystem mit wenigstens zwei Ausführungseinheiten, wobei ein Zwischenspeicher, insbesondere ein Cache vorgesehen ist und weiterhin Umschaltmittel und Vergleichsmittel vorgesehen sind, wobei zwischen einem Performanzmodus und einem Vergleichsmodus umgeschaltet wird, **dadurch gekennzeichnet, dass** Mittel eingesetzt werden so dass auf den Zwischenspeicher im Vergleichsmodus von beiden Ausführungseinheiten zugegriffen wird und im Performanzmodus nur von einer Ausführungseinheit.

2. Verfahren nach Anspruch 1, **dadurch gekennzeichnet, dass** im Performanzmodus eine Verbindung der zweiten Ausführungseinheit zum Zwischenspeicher durch Schaltmittel aufgetrennt wird.

3. Verfahren nach Anspruch 1, **dadurch gekennzeichnet, dass** im Vergleichsmodus die Vergleichsmittel Informationen auf Übereinstimmung vergleichen und bei Abweichung auf Fehler erkannt wird, wobei bei Fehler ein Zugriff auf den Zwischenspeicher verhindert wird.

4. Verfahren nach Anspruch 1, **dadurch gekennzeichnet, dass** im Vergleichsmodus die Vergleichsmittel Informationen auf Übereinstimmung vergleichen und bei Abweichung auf Fehler erkannt wird, wobei bei Fehler Informationen im Zwischenspeicher ungültig gemacht oder gesperrt werden.

5. Verfahren nach Anspruch 1, **dadurch gekennzeichnet, dass** im Vergleichsmodus die Vergleichsmittel Informationen auf Übereinstimmung vergleichen und bei Abweichung auf Fehler erkannt wird, wobei bei Fehler das Rechnersystem neu oder wieder gestartet wird.

6. Verfahren nach Anspruch 1, **dadurch gekennzeichnet, dass** im Vergleichsmodus die Vergleichsmittel Informationen auf Übereinstimmung vergleichen und bei Abweichung auf Fehler erkannt wird, wobei bei Fehler wenigstens eine Ausführungseinheit neu oder wieder gestartet wird.

7. Vorrichtung zur Steuerung eines Speicherzugriffs bei einem Rechnersystem mit wenigstens zwei Ausführungseinheiten, wobei ein Zwischenspeicher, insbesondere ein Cache vorgesehen ist und weiterhin Umschaltmittel und Vergleichsmittel vorgesehen sind, wobei zwischen einem Performanzmodus und einem Vergleichsmodus umgeschaltet wird, **dadurch gekennzeichnet, dass** Mittel enthalten sind, die derart ausgebildet sind das durch diese auf den Zwischenspeicher im Vergleichsmodus von beiden Ausführungseinheiten zugegriffen wird und im Performanzmodus nur von einer Ausführungseinheit.

8. Vorrichtung nach Anspruch 7, **dadurch gekennzeichnet, dass** die Mittel als Schaltmittel ausgebildet sind, die einen Zugriff der zweiten Ausführungseinheit auf den Zwischenspeicher verhindert oder erlaubt.

9. Vorrichtung nach Anspruch 7, **dadurch gekennzeichnet, dass** die Vergleichsmittel derart ausgestaltet sind, dass diese im Vergleichsmodus Informationen auf Übereinstimmung vergleichen und bei Abweichung auf Fehler erkennen und bei Fehler einen Zugriff auf den Zwischenspeicher verhindern.

10. Vorrichtung nach Anspruch 7, **dadurch gekennzeichnet, dass** die Vergleichsmittel derart ausgestaltet sind, dass diese im Vergleichsmodus Informationen auf Übereinstimmung vergleichen und bei Abweichung auf Fehler erkennen und bei Fehler Informationen im Zwischenspeicher ungültig machen oder sperren.

11. Vorrichtung nach Anspruch 7, **dadurch gekennzeichet, dass** die Vergleichsmittel zwischen wenigstens einer Ausführungseinheit und dem Zwischenspeicher lokalisiert sind

12. Vorrichtung nach Anspruch 7, **dadurch gekennzeichnet, dass** der Zwischenspeicher zwischen wenigstens einer Ausführungseinheit und den Vergleichsmitteln lokalisiert ist.

13. Vorrichtung nach Anspruch 7 und 11 oder 7 und 12, **dadurch gekennzeichnet, dass** die Umschaltmittel und die Vergleichsmittel als eine Umschalt- und Vergleichseinheit realisiert sind.

## Claims

1. Method for controlling memory access in a computer system having at least two execution units, with a buffer memory, in particular a cache, being provided and changeover means and comparison means also being provided, with a changeover being made between a performance mode and a comparison mode, **characterized in that** means are used so that the buffer memory is accessed by both execution units in the comparison mode and only by one execution unit in the performance mode.

2. Method according to Claim 1, **characterized in that** a connection between the second execution unit and the buffer memory is disconnected by switching means in the performance mode.

3. Method according to Claim 1, **characterized in that** the comparison means compare items of information for correspondence in the comparison mode and faults are identified in the event of deviation, with access to the buffer memory being prevented in the event of faults.

4. Method according to Claim 1, **characterized in that** the comparison means compare items of information for correspondence in the comparison mode and faults are identified in the event of deviation, with items of information in the buffer memory being invalidated or blocked in the event of faults.

5. Method according to Claim 1, **characterized in that** the comparison means compare items of information for correspondence in the comparison mode and faults are identified in the event of deviation, with the computer system being newly started or restarted in the event of faults.

6. Method according to Claim 1, **characterized in that** the comparison means compare items of information for correspondence in the comparison mode and faults are identified in the event of deviation, with at least one execution unit being newly started or restarted in the event of faults.

7. Apparatus for controlling memory access in a computer system having at least two execution units, with a buffer memory, in particular a cache, being provided and changeover means and comparison means also being provided, with a changeover being made between a performance mode and a comparison mode, **characterized in that** means are contained which are designed in such a way that, by virtue of these means, the buffer memory is accessed by both execution units in the comparison mode and only by one execution unit in the performance mode.

8. Apparatus according to Claim 7, **characterized in that** the means are designed as switching means which prevent or permit access to the buffer memory by the second execution unit.

9. Apparatus according to Claim 7, **characterized in that** the comparison means are configured in such a way that they compare items of information for correspondence in the comparison mode and identify faults in the event of deviation and prevent access to the buffer memory in the event of faults.

10. Apparatus according to Claim 7, **characterized in that** the comparison means are configured in such a way that they compare items of information for correspondence in the comparison mode and identify faults in the event of deviation and invalidate or block items of information in the buffer memory in the event of faults.

11. Apparatus according to Claim 7, **characterized in that** the comparison means are located between at least one execution unit and the buffer memory.

12. Apparatus according to Claim 7, **characterized in that** the buffer memory is located between at least one execution unit and the comparison means.

13. Apparatus according to Claims 7 and 11 or 7 and 12, **characterized in that** the changeover means and the comparison means are realized as a changeover and comparison unit.

## Revendications

1. Procédé de commande d'un accès à une mémoire dans un système de calculateur comportant au moins deux unités d'exécution, une mémoire intermédiaire notamment une mémoire cache étant prévue ainsi que des moyens de commutation et des moyens de comparaison et on commute entre un mode de performance et un mode de comparaison,
**caractérisé en ce qu'**
on utilise des moyens de façon qu'en mode de comparaison les deux unités d'exécution puissent accéder à la mémoire intermédiaire mais qu'en mode performance l'accès soit réservé à seulement une unité d'exécution.

2. Procédé selon la revendication 1,
**caractérisé en ce qu'**
en mode performance, on ouvre la liaison entre la seconde unité d'exécution et la mémoire intermédiaire à l'aide des moyens de commutation.

3. Procédé selon la revendication 1,
**caractérisé en ce qu'**
en mode de comparaison, les moyens de comparaison comparent la concordance des informations et en cas d'écart, on détecte un défaut et en cas de défaut l'accès est bloqué vers la mémoire intermédiaire.

4. Procédé selon la revendication 1,
**caractérisé en ce qu'**
en mode de comparaison, on compare la concordance des informations par les moyens de comparaison et en cas d'écart, on détecte un défaut et en cas de défaut, les informations sont neutralisées dans la mémoire intermédiaire ou sont bloquées.

5. Procédé selon la revendication 1,
**caractérisé en ce qu'**
en mode de comparaison, les moyens de comparaison comparent les informations pour déterminer leur concordance, et en cas d'écart, on constate un défaut et en cas de défaut, on redémarre ou on démarre de nouveau le système de calculateur.

6. Procédé selon la revendication 1,
**caractérisé en ce qu'**
en mode de comparaison, les moyens de comparaison comparent les informations quant à leur concordance et en l'absence de défaut, reconnue, on démarre à nouveau ou on redémarre au moins une unité d'exécution.

7. Dispositif de commande d'un accès à une mémoire dans un système de calculateur comportant au moins deux unités d'exécution, une mémoire intermédiaire notamment une mémoire cache et des moyens de commutation et des moyens de comparaison, et
on commute entre un mode de performance et un mode de comparaison,
**caractérisé par**
des moyens réalisés de façon à permettre aux deux unités d'exécution d'accéder à la mémoire intermédiaire en mode de comparaison et qu' en mode de performance seule une unité d'exécution y accède.

8. Dispositif selon la revendication 7,
**caractérisé en ce que**
les moyens sont réalisés sous la forme de moyens de commutation qui permettent ou interdisent l'accès de la seconde unité d'exécution à la mémoire intermédiaire.

9. Dispositif selon la revendication 7,
**caractérisé en ce que**
les moyens de comparaison sont réalisés pour qu'en mode de comparaison, ils comparent la concordance des informations et qu'en cas d'écart on détecte un défaut et en cas de défaut, on interdit l'accès à la mémoire intermédiaire.

10. Dispositif selon la revendication 7,
**caractérisé en ce que**
les moyens de comparaison sont réalisés pour qu'en mode de comparaison, ils comparent la concordance des informations et en cas d'écart, ils détectent un défaut et en cas de défaut, les informations de la mémoire intermédiaire sont neutralisées ou bloquées.

11. Dispositif selon la revendication 7,
**caractérisé en ce que**
les moyens de comparaison sont localisés entre au moins une unité d'exploitation et la mémoire intermédiaire.

12. Dispositif selon la revendication 7,
**caractérisé en ce que**
la mémoire intermédiaire est localisée entre au moins une unité d'exploitation et les moyens de comparaison.

13. Dispositif selon les revendications 7 et 11 ou selon les revendications 7 et 12,
**caractérisé en ce que**
les moyens de commutation et les moyens de comparaison sont réalisés sous la forme d'une unité de commutation et d'une unité de comparaison.
